# EUROPÄISCHE PATENTSCHRIFT

(11) **EP 3 164 257 B1**
(45) Veröffentlichungstag und Bekanntmachung des Hinweises auf die Patenterteilung: **09.05.2018**
(21) Anmeldenummer: 15732167.0
(22) Anmeldetag: 29.06.2015
(51) Int. Cl.: B29C 47/68, B01D 29/00, B29C 47/08

(54) **VORRICHTUNG ZUM FILTERN EINER KUNSTSTOFFSCHMELZE**
DEVICE FOR FILTERING A PLASTIC MELT
DISPOSITIF DE FILTRATION D'UNE MATIÈRE PLASTIQUE FONDUE

(30) Priorität: 01.07.2014 DE 102014009768
(43) Veröffentlichungstag der Anmeldung: 10.05.2017
(73) Patentinhaber: Maag Automatik GmbH, 63762 Großostheim (DE)
(72) Erfinder: POHL, Harald, 48477 Hörstel (DE); STEINMANN, Markus, CH-8052 Zürich (CH)
(74) Vertreter: Spranger, Stephan
(86) Internationale Anmeldenummer: PCT/EP2015/001308
(87) Internationale Veröffentlichungsnummer: WO 2016/000816

(56) Entgegenhaltungen:
- DE-A1- 1 800 169
- DE-A1- 19 615 679
- DE-C2- 19 834 302
- DE-U1- 9 105 000
- DE-U1-202010 014 709
- DE-U1-202014 001 675
- GB-A- 2 159 064
- US-A- 4 070 138

## Beschreibung

Die Erfindung betrifft eine Vorrichtung zum Filtrieren einer Kunststoffschmelze, insbesondere einer thermoplastischen Kunststoffschmelze. Die Vorrichtung weist gemäß dem Oberbegriff des Anspruchs 1 ein Gehäuse auf, welches zumindest einen Eintrittskanal und zumindest einen Austrittskanal für die Kunststoffschmelze aufweist, wobei der zumindest eine Eintrittskanal von dem zumindest einen Austrittskanal durch zumindest einen Hohlraum zur Aufnahme zumindest eines darin axial und/oder radial verstellbaren Filterbolzens getrennt ist, wobei der zumindest eine Filterbolzen einen Filterabschnitt aufweist, an dem zumindest eine Filtereinrichtung lösbar befestigt ist, so dass der Filterabschnitt des zumindest einen Filterbolzens und die zumindest eine Filtereinrichtung einen Filtrathohlraum definieren, wobei in einer Arbeitsstellung des Filterbolzens die Kunststoffschmelze von dem zumindest einen Eintrittskanal durch die Filtereinrichtung zu dem Filtrathohlraum durchtreten kann und der Filtrathohlraum mit dem zumindest einen Austrittskanal in Fluidverbindung steht, und wobei in einer Filterwechselposition des Filterbolzens die Filtereinrichtung frei zugänglich ist für einen Austausch der Filtereinrichtung, wobei in dem Filterbolzen zumindest ein Abführkanal ausgebildet ist, wobei in einer Anfahrposition des Filterbolzens ein Ende des zumindest einen Abführkanals in fluider Verbindung mit dem zumindest einen Eintrittskanal steht, um die durch den zumindest einen Eintrittskanal zugeführte Kunststoffschmelze aufzunehmen, und an einem anderen Ende des zumindest einen Abführkanals die Kunststoffschmelze abzugeben, und wobei im Bereich des Filterabschnitts des Filterbolzens zumindest ein Steg in dem Filterbolzen ausgebildet ist, welcher sich bevorzugt in axialer Richtung durch den Filtrathohlraum hindurch erstreckt, wobei der Abführkanal innerhalb des zumindest einen Stegs verlaufend ausgebildet ist. Eine Vorrichtung zum Filtrieren einer Kunststoffschmelze mit den Merkmalen gemäß dem Oberbegriff des Anspruchs 1 ist beispielsweise aus der deutschen Offenlegungsschrift DE 196 15 679 A1 bekannt.
Derartige Vorrichtungen werden meist vor oder nach einer Anfahrvorrichtung angeordnet, wie sie beispielsweise aus der deutschen Patentschrift DE 198 34 302 C2 im Zusammenhang mit einer dort nachgeordneten Filtervorrichtung bekannt ist. Es ist daher notwendig, zwei unterschiedliche Vorrichtungen vorzusehen, was einen entsprechenden Aufwand an Material, Anlagengröße und Kosten verursacht.
Die deutsche Gebrauchsmusterschrift DE 91 05 000 U1 beschreibt eine Siebwechselkassette mit einem Einzelsieb bzw. Siebpaketen, mit jeweils einer oder mehreren ebenen ringförmigen Sieblochplatte(n).
Die britische Patentschrift GB 2 159 064 A beschreibt eine Vorrichtung zum Filtrieren von Kunststoffschmelzen mit Einzelsieben bzw. Siebpaketen mit geschlossenen Sieblochzylinder.
Der vorliegenden Erfindung liegt somit die Aufgabe zugrunde, eine Vorrichtung zum Filtrieren einer Kunststoffschmelze vorzusehen, welche die Nachteile des Standes der Technik überwindet, und insbesondere eine Vorrichtung zum Filtrieren einer Kunststoffschmelze anzugeben, welche ohne Vorsehen einer zusätzlichen Anfahrvorrichtung einsetzbar ist.

Diese Aufgabe wird erfindungsgemäß durch eine Vorrichtung mit den Merkmalen des Anspruchs 1 gelöst. Bevorzugte Ausführungsformen der Erfindung sind in den Unteransprüchen definiert.

Die erfindungsgemäße Vorrichtung zum Filtrieren einer Kunststoffschmelze, insbesondere einer thermoplastischen Kunststoffschmelze, weist ein Gehäuse auf, welches mit zumindest einem Eintrittskanal und zumindest einem Austrittskanal für die zu filtrierende Kunststoffschmelze versehen ist. Der zumindest eine Eintrittskanal ist von dem zumindest einen Austrittskanal durch zumindest einen Filterhohlraum abgetrennt, bevorzugt durch mindestens einen senkrecht zu diesen Kanälen verlaufenden, besonders bevorzugt zylindrischen Filterhohlraum, wobei innerhalb des zumindest einen Filterhohlraums ein dort axial und/oder radial verschiebbarer bzw. verstellbarer Filterbolzen angeordnet ist, so dass dadurch der zumindest eine Eintrittskanal von dem zumindest einen Austrittskanal getrennt ist. Die Verstellung bzw. Verschiebung kann dabei zweckmäßig durch eine Hydraulikvorrichtung erfolgen. Der Filterbolzen ist dabei bevorzugt derart präzise innerhalb des bevorzugt zylindrischen Filterhohlraums angeordnet, dass ohne zusätzliche Dichtmittel auch bei einer Verschiebung des Filterbolzens verhindert wird, dass sich zwischen der entsprechenden Außenwandung des Bolzens und der entsprechenden Innenwandung des zylindrischen Filterhohlraums in unerwünschter Weise Kunststoffschmelze durchdrücken kann. Der zumindest eine Filterbolzen weist einen Filterabschnitt auf, an dem zumindest eine Filtereinrichtung lösbar befestigt ist, so dass durch den Filterabschnitt des zumindest einen Filterbolzens und die zumindest eine Filtereinrichtung einen Filtrathohlraum definieren. In einer Arbeitsstellung des Filterbolzens kann die Kunststoffschmelze von dem zumindest einen Eintrittskanal durch die Filtereinrichtung zu dem Filtrathohlraum durchtreten und der Filtrathohlraum steht mit dem zumindest einen Austrittskanal in Fluidverbindung, so dass die filtrierte Kunststoffschmelze durch den zumindest einen Austrittskanal abgegeben werden kann. In einer Filterwechselposition des Filterbolzens ist die Filtereinrichtung frei zugänglich für einen Austausch der Filtereinrichtung. In dem Filterbolzen ist weiter zumindest ein Abführkanal ausgebildet, wobei in einer Anfahrposition des Filterbolzens ein Ende des zumindest einen Abführkanals in fluider Verbindung mit dem zumindest einen Eintrittskanal steht, um die durch den zumindest einen Eintrittskanal zugeführte Kunststoffschmelze aufzunehmen, und an einem anderen Ende des zumindest einen Abführkanals die Kunststoffschmelze abzugeben. Die Abgabe kann direkt an die Umwelt erfolgen. Bevorzugt kann in dem Gehäuse weiter zumindest ein Austragskanal ausgebildet sein, derart, dass in der Anfahrposition Kunststoffschmelze aus dem Abführkanal des Filterbolzens in den Austragskanal des Gehäuses abgegeben wird.

Erfindungsgemäß wird somit eine kompakte und leicht wartbare Vorrichtung bereitgestellt, in welcher die Funktionalitäten einer Filtriervorrichtung und einer Anfahrvorrichtung vereint sind.

Bevorzugt kann zweckmäßig vorgesehen sein, dass die Filtereinrichtung als ein Filtersieb ausgeführt ist. Die Filtereinrichtung kann im Querschnitt bogenförmig ausgebildet sein und bevorzugt einen Winkel von mindestens 180° und maximal 270° des Umfangs des zumindest einen Filterbolzens umfassen, besonders bevorzugt etwa 240° des Umfangs umfassen. Erfindungsgemäß ist im Bereich des Filterabschnitts des Filterbolzens zumindest ein Steg in dem Filterbolzen ausgebildet, welcher sich bevorzugt in axialer Richtung durch den Filtrathohlraum hindurch erstreckt, wobei der Abführkanal innerhalb des zumindest einen Stegs verlaufend ausgebildet ist. Durch die Ausbildung des Steges kann dabei eine erhöhte mechanische Steifigkeit des Filterbolzens in diesem Bereich erzielt werden, was zu einer entsprechend erhöhten Betriebssicherheit führen kann. Darüber hinaus kann, wenn der Abführkanal durch den Steg hindurch verlaufend ausgebildet ist, eine Verkürzung der notwendigen Baulänge des Filterbolzens in axialer Richtung erreicht werden.

Der zumindest eine Steg kann insbesondere einen Querschnitt in Form eines Vielecks aufweisen, bevorzugt in Form eines Sechsecks. Diese Formgebung eignet sich für eine vergleichsweise einfache Fertigung des zumindest einen Steges und erlaubt gleichzeitig ein günstiges und wenig gestörtes Strömungsverhalten der Kunststoffschmelze innerhalb des Filtrathohlraums zu erzielen. Hierbei erweist es sich auch als vorteilhaft, die Filtereinrichtung zwischen dem zumindest einen Steg und dem zumindest einen Einlasskanal anzuordnen. Besonders bevorzugt weist das Vieleck bzw. das bevorzugte Sechseck dabei strömungsgünstig abgerundete Kanten auf.

Erfindungsgemäß bevorzugt kann der zumindest einen Steg so angeordnet sein, dass eine Längsachse des Filterbolzens innerhalb des zumindest einen Stegs liegt, was eine besonders kompakte und strömungsgünstige Bauweise ergibt. Auch eine Anordnung des zumindest einen Stegs exzentrisch versetzt und parallel zur Längsachse des Filterbolzens kann möglich sein.

Besonders bevorzugt ist es, wenn gemäß einer bevorzugten Ausführungsform der Filterbolzen neben dem Filterabschnitt noch einen Bolzenabschnitt aufweist, welcher im Querschnitt dem Querschnitt des Filterhohlraums in dem Gehäuse entspricht, so dass er diesen Filterhohlraum in der Filterwechselposition ausfüllt. Somit kann beispielsweise im Fall eines Auswechselns der Filtereinrichtung die Zuführung und Abführung von zu filtrierendem Kunststoffmaterial allein dadurch auf konstruktiv einfache Weise unterbrochen werden.

Es sei angemerkt, dass der in der vorliegenden Beschreibung verwendete Begriff Kunststoff schmelze insbesondere eine Polypropylen-, Polyethylen-, Hochdruckpolypropylen-, Niederdruckpolyethylen-, lineares Niederdruckpolyethylen-, Polystyrol-, Polyamid-, Alkyl-Butadien-Styrol-(ABS)-, Polyester, Polyoxymethylen-(POM)-, Polyacrylate-, Polymethylmetacrylate-(PMMA)- und Polyvinylchlorid-Schmelze bezeichnen kann. Ferner ist festzustellen, dass die zylinderförmig bzw. kreisförmig bezeichneten Elemente der erfindungsgemäßen Vorrichtung auch polygonale Formen entsprechend aufweisen können.

Die erfindungsgemäße Vorrichtung wird nachfolgend anhand der Zeichnung beispielhaft näher erläutert werden. Es zeigen:
- Fig. 1: eine schematische Darstellung einer erfindungsgemäßen Vorrichtung zum Filtrieren einer thermoplastischen Kunststoffschmelze;
- Fig. 2: eine Teilansicht im Schnitt der Linie A-A in Fig. 1 in einer Arbeitsposition;
- Fig. 3: eine Teilansicht im Schnitt der Linie B-B in Fig. 1 in der Arbeitsposition;
- Fig. 4: eine Teilansicht im Schnitt der Linie A-A in Fig. 1 in einer Filterwechselposition; und
- Fig. 5: eine Teilansicht im Schnitt der Linie A-A in Fig. 1 in einer Anfahrposition; und

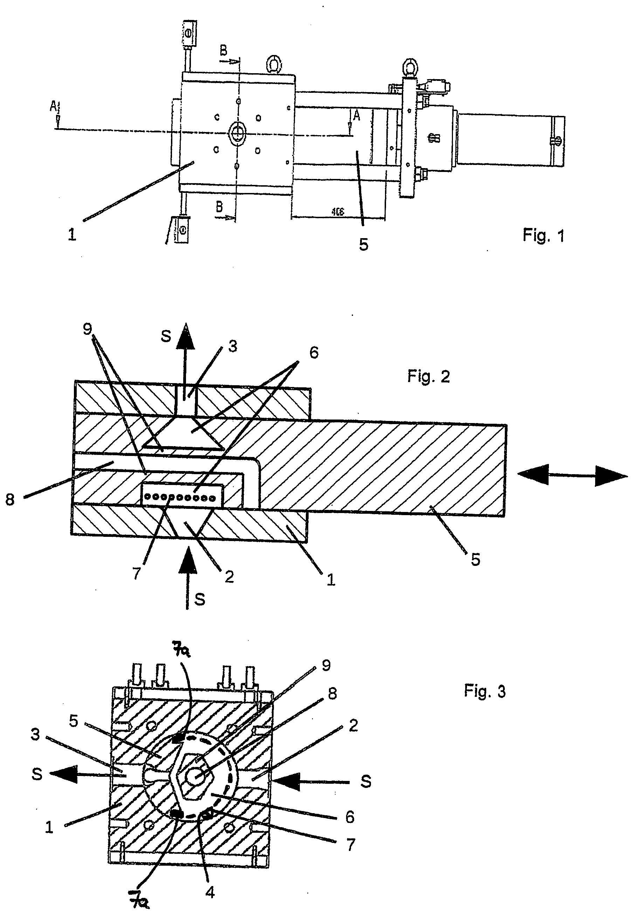

In Fig. 1 ist schematisch eine Vorrichtung zum Filtrieren einer Kunststoffschmelze gemäß der Erfindung abgebildet. Wie in Fig. 2 und Fig. 3 als Teilansichten im Schnitt der Linie A-A bzw. der Linie B-B in Fig. 1 dargestellt, ist das Gehäuse 1 mit einem zylindrischen Filterhohlraum 4 versehen, wobei der Filterhohlraum 4 mit einem darin axial verschiebbaren Filterbolzen 5 versehen ist. Die axiale Verschiebbarkeit ist durch den entsprechenden Doppelpfeil in Fig. 2 angegeben. Um die axiale Verschiebung des Filterbolzens 5 zu bewirken, ist dem Bolzen ein Hydraulikelement zugeordnet.

Die Fig. 2 und 3 zeigen den Filterbolzen 5 in einer Filtrierposition bzw. Arbeitsposition. In Strömungsrichtung der zu filtrierenden Kunststoffschmelze S gesehen gelangt diese über einen Eintrittskanal 2 in das Gehäuse 1, von dort in den Filterhohlraum 4 in dem Gehäuse 1, wird dort durch die Filtereinrichtung 7 geführt, durch welche die Kunststoffschmelze zu einem Filtrathohlraum 6 durchtritt. Der Filtrathohlraum 6 wird dabei definiert durch die Filtereinrichtung 7 und den Filterbolzen 5, beziehungsweise durch die Wandungen der Ausnehmung(en), die in diesem Bereich des Filtrierbolzens 5, der als Filtrierbereich bezeichnet werden soll, in dem Filtrierbolzen 5 ausgebildet sind. Die filtrierte Kunststoffschmelze S gelangt dann vom Filtrathohlraum 6 zu dem damit in Fluidverbindung stehenden Austrittskanal 3 und somit wieder aus dem Gehäuse 1.

Die Filtereinrichtung 7 kann beispielsweise durch ein Filtersieb gebildet sein, das erfindungsgemäß im Querschnitt bogenförmig ausgebildet ist und insbesondere etwa 240° des dortigen Umfangs des Filterbolzens 5 umfasst. Die Filtereinrichtung 7 kann auf geeignete Weise an dem Filterbolzen 5 lösbar befestigt ist. Hierzu können beispielsweise Befestigungsabschnitte 7a vorgesehen sein, die sich in axialer Richtung erschrecken und die beispielsweise eine Schraubbefestigung der Filtereinrichtung 7 an den Filterbolzen 5 erlauben.

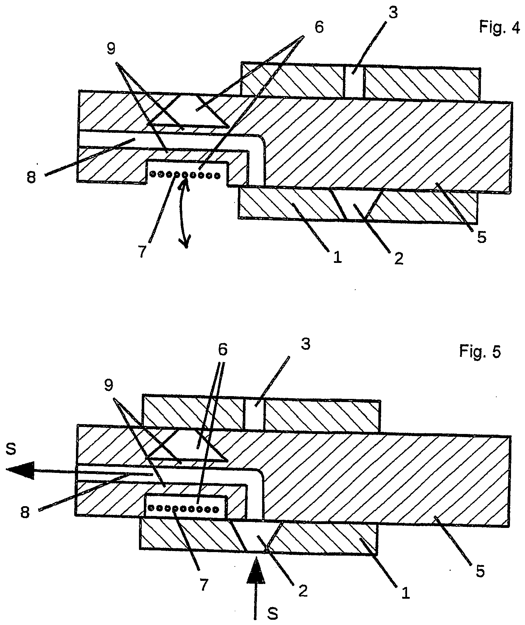

Wie bereits angedeutet, befindet sich in der Darstellung der Fig. 2 und Fig. 3 der Filterbolzen 5 in einer Filtrierposition (Arbeitsstellung). Im Unterschied dazu ist in der Darstellung der Fig. 4 der Filterbolzen 5 in einer Filteraustauschposition abgebildet, in welcher die Filtereinrichtung 7 dort frei von außen zugänglich ist, so dass dort in dieser Position ein Austausch der beispielsweise mit Schmutzpartikeln beladenen Filtereinrichtung 7 gegen eine unbeladene Filtereinrichtung 7 erfolgen kann.

Der zylindrische Filterbolzen 5 ist so auf die Durchmesser des Filterhohlraums 4 im Gehäuse 1 angepasst, dass selbst bei einer axialen Verschiebung des Filterbolzens 5 in der entsprechenden Pfeilrichtung der Fig. 2 keine Leckage auftritt und somit hier weder in der Filtrierposition noch in der Filteraustauschposition Kunststoffschmelze unerwünscht austreten kann. Dazu weist der Filterbolzen 5 einen Bolzenabschnitt auf, der sich in der Darstellung der Fig. 4 zwischen dem Einlasskanal 2 und dem Auslasskanal 3 erstreckt, welcher im Querschnitt dem Querschnitt des Filterhohlraums 4 in dem Gehäuse 1 entspricht. Der Filterhohlraum 4 ist somit in der Filteraustauschposition entsprechend ausgefüllt und unterbindet einen Fluss der Kunststoffschmelze S.

In der Fig. 5 ist der Filterbolzen 5 in einer Anfahrposition gezeigt. In dieser Position steht der Einlasskanal 2 in dem Gehäuse 1 in Fluidverbindung mit einem Austragskanal 8, der in dem Filterbolzen 5 ausgebildet ist. Der Austragskanal 8 empfängt die Kunststoffschmelze S, die durch den Einlasskanal 2 zugeführt wird, und führt diese am anderen Ende des Austragskanals 8 an geeigneter Stelle ab, wie zum Beispiel in der Fig. 5 am axialen Ende des Filterbolzens 5 durch eine direkte Abgabe in die Umwelt. Auf diese Weise kann in der Anfahrposition die erfindungsgemäße Vorrichtung die Funktionalität einer Anfahrvorrichtung übernehmen, einen Fluss von Kunststoffschmelze temporär von dem Auslasskanal fernzuhalten und abzuleiten.

Wie in der Fig. 5 weiter gezeigt, ist der Austragskanal 8 so ausgebildet, dass er durch einen Steg 9 des Filterbolzens 5 hindurch verläuft, welcher Steg 9 sich in axialer Richtung des Filterbolzens 5 durch den Filtrathohlraum 6 hindurch erstreckend ausgebildet ist. Die bei einem Anfahrvorgang abzuführende Kunststoffschmelze kann so auf einfache Weise hinreichend weit von dem Austrittskanal 3 weg geführt werden, ohne dass dafür eine wesentliche Verlängerung des Filterbolzens 5 in axialer Richtung erforderlich ist.

Der Steg 9 kann insbesondere einen Querschnitt in Form eines Vielecks aufweisen, bevorzugt in Form eines Sechsecks. Wie in der Fig. 5 weiter gezeigt, kann die Filtereinrichtung 7 zwischen dem Steg 9 und dem Einlasskanal 2 angeordnet sein.

Mit der erfindungsgemäßen Vorrichtung kann auf einfache Weise konstruktiv ohne hohen baulichen Aufwand eine Vorrichtung zum Filtrieren einer Kunststoffschmelze bereitgestellt werden, welche gleichzeitig die Funktionalität einer Anfahrvorrichtung verwirklichen kann.

## Patentansprüche

1. Vorrichtung zum Filtrieren einer Kunststoffschmelze,
mit einem Gehäuse (1), welches zumindest einen Eintrittskanal (2) und zumindest einen Austrittskanal (3) für die Kunststoffschmelze aufweist,
wobei der zumindest eine Eintrittskanal (2) von dem zumindest einen Austrittskanal (3) durch zumindest einen Hohlraum (4) zur Aufnahme zumindest eines darin axial und/oder radial verstellbaren Filterbolzens (5) getrennt ist,
wobei der zumindest eine Filterbolzen (5) einen Filterabschnitt aufweist, an dem zumindest eine Filtereinrichtung (7) lösbar befestigt ist, so dass durch den Filterabschnitt des zumindest einen Filterbolzens (5) und die zumindest eine Filtereinrichtung (7) einen Filtrathohlraum (6) definieren,
wobei in einer Arbeitsstellung des Filterbolzens (5) die Kunststoffschmelze von dem zumindest einen Eintrittskanal (2) durch die Filtereinrichtung (7) zu dem Filtrathohlraum (6) durchtreten kann und der Filtrathohlraum (6) mit dem zumindest einen Austrittskanal (3) in Fluidverbindung steht, und
wobei in einer Filterwechselposition des Filterbolzens (5) die Filtereinrichtung (7) frei zugänglich ist für einen Austausch der Filtereinrichtung (7), wobei in dem Filterbolzen (5) zumindest ein Abführkanal (8) ausgebildet ist, wobei in einer Anfahrposition des Filterbolzens (5) ein Ende des zumindest einen Abführkanals (8) in fluider Verbindung mit dem zumindest einen Eintrittskanal (2) steht, um die durch den zumindest einen Eintrittskanal (2) zugeführte Kunststoffschmelze aufzunehmen, und an einem anderen Ende des zumindest einen Abführkanals (8) die Kunststoffschmelze abzugeben,
**dadurch gekennzeichnet, dass** im Bereich des Filterabschnitts des Filterbolzens (5) zumindest ein Steg (9) in dem Filterbolzen (5) ausgebildet ist, welcher sich in axialer Richtung durch den Filtrathohlraum (6) hindurch erstreckt, wobei der Abführkanal (8) innerhalb des zumindest einen Stegs (9) verlaufend ausgebildet ist.

2. Vorrichtung nach Anspruch 1, **dadurch gekennzeichnet, dass** die lösbare Filtereinrichtung (7) im Querschnitt bogenförmig ausgebildet ist und bevorzugt einen Winkel von mindestens 180° und maximal 270° des Umfangs des zumindest einen Filterbolzens (5) umfasst, besonders bevorzugt etwa 240° des Umfangs umfasst.

3. Vorrichtung nach einem der Ansprüche 1 bis 2, **dadurch gekennzeichnet, dass** die zumindest eine Filtereinrichtung (7) als ein Filtersieb ausgeführt ist.

4. Vorrichtung nach Anspruch 1, **dadurch gekennzeichnet, dass** die Filtereinrichtung (7) zwischen dem zumindest einen Steg (9) und dem zumindest einen Einlasskanal angeordnet ist.

5. Vorrichtung nach einem der Ansprüche 1 oder 4, **dadurch gekennzeichnet, dass** der zumindest eine Steg (9) einen Querschnitt in Form eines Vielecks aufweist, insbesondere in Form eines Sechsecks aufweist.

6. Vorrichtung nach einem der Ansprüche 1, 4 oder 5, **dadurch gekennzeichnet, dass** der zumindest einen Steg (9) so angeordnet ist, dass eine Längsachse des Filterbolzens (5) innerhalb des zumindest einen Stegs (9) liegt.

7. Vorrichtung nach einem der vorangehenden Ansprüche, **dadurch gekennzeichnet, dass** das Gehäuse (1) weiter einen Austragskanal aufweist, wobei in der Anfahrposition die Kunststoffschmelze aus dem anderen Ende des zumindest einen Abführkanals (8) in den Austragskanal abgegeben wird.

8. Vorrichtung nach einem der vorangehenden Ansprüche, **dadurch gekennzeichnet, dass** der zumindest eine Filterbolzen (5) einen Bolzenabschnitt aufweist, welcher im Querschnitt dem Querschnitt des Filterhohlraums (4) in dem Gehäuse (1) entspricht, so dass er den Filterhohlraum (4) zwischen dem Einlasskanal (2) und dem Auslasskanal (3) ausfüllt, wenn sich der zumindest eine Filterbolzen (5) in der Filterwechselposition befindet.

## Claims

1. Device for filtering a plastic melt,
comprising a housing (1) which has at least one inlet channel (2) and at least one outlet channel (3) for the plastic melt,
wherein the at least one inlet channel (2) is separated from the at least one outlet channel (3) by at least one cavity (4) for accommodating at least one filter pin (5) which is axially and/or radially movable therein,
wherein the at least one filter pin (5) has a filter section to which at least one filtering means (7) is detachably fastened so that the filter section of the at least one filter pin (5) and the at least one filtering means (7) define a filtrate cavity (6),
wherein, in a working position of the filter pin (5), the plastic melt can pass from the at least one inlet channel (2) through the filtering means (7) to the filtrate cavity (6) and the filtrate cavity (6) is in fluid connection with the at least one outlet channel (3), and wherein, in a filter change position of the filter pin (5), the filtering means (7) is freely accessible for replacing the filtering means (7),
wherein at least one drainage channel (8) is formed in the filter pin (5), wherein, in a start-up position of the filter pin (5), one end of the at least one drainage channel (8) is in fluid connection with the at least one inlet channel (2) in order to receive the plastic melt that is fed through the at least one inlet channel (2) and to output the plastic melt at another end of the at least one drainage channel (8), **characterized in that** at least one web (9) is formed in the filter pin (5) in the region of the filter section of the filter pin (5), which web extends in the axial direction through the filtrate cavity (6), wherein the drainage channel (8) is designed to run within the at least one web (9).

2. Device according to claim 1, **characterized in that** the detachable filtering means (7) is arc-shaped in cross-section and preferably covers an angle of at least 180° and at most 270° of the circumference of the at least one filter pin (5), particularly preferably approximately 240° of the circumference.

3. Device according to one of claims 1 to 2, **characterized in that** the at least one filtering means (7) is configured as a filter screen.

4. Device according to claim 1, **characterized in that** the filtering means (7) is arranged between the at least one web (9) and the at least one inlet channel.

5. Device according to one of claims 1 or 4, **characterized in that** the at least one web (9) has a cross-section in the shape of a polygon, in particular in the shape of a hexagon.

6. Device according to one of claims 1, 4 or 5, **characterized in that** the at least one web (9) is arranged in such a way that a longitudinal axis of the filter pin (5) is situated within the at least one web (9).

7. Device according to one of the preceding claims, **characterized in that** the housing (1) furthermore has a discharge channel, wherein, in the start-up position, the plastic melt is output from the other end of the at least one drainage channel (8) into the discharge channel.

8. Device according to one of the preceding claims, **characterized in that** the at least one filter pin (5) has a pin section which corresponds in cross-section to the cross-section of the filter cavity (4) in the housing (1), so that it fills the filter cavity (4) between the inlet channel (2) and the outlet channel (3) when the at least one filter pin (5) is in the filter change position.

## Revendications

1. Dispositif pour filtrer une masse fondue de matière plastique avec un boîtier (1) comportant au moins un canal d'entrée (2) et au moins un canal de sortie (3) pour la masse fondue, le au moins un canal d'entrée (2) étant séparé du au moins un canal de sortie (3) par au moins un espace creux (4) recevant un axe de filtration (5) réglable axialement et/ou radialement,
le au moins un axe de filtration (5) présentant une partie filtrante sur laquelle est fixée de façon amovible au moins un dispositif de filtration (7) de sorte que la partie filtrante du au moins un axe de filtration (5) et le au moins un dispositif de filtration (7) définissent un espace creux pour filtrat (6),
et en une position de travail de l'axe de filtration (5), la masse fondue de plastique pouvant passer du au moins un canal d'entrée (2) à l'espace creux pour filtrat (6) en traversant le dispositif de filtration (7) et l'espace creux pour filtrat (6) étant en communication fluide avec le au moins un canal de sortie (3),
et dans une position d'échange de filtre de l'axe de filtration (5), le dispositif de filtration (7) étant librement accessible pour un échange du dispositif de filtration (7),
au moins un canal d'évacuation (8) étant formé dans l'axe de filtration (5) et dans une position de démarrage de l'axe de filtration (5), une extrémité du au moins un canal d'évacuation (8) étant en communication fluide avec le au moins un canal d'entrée (2), pour recevoir la masse fondue de plastique amenée par le au moins un canal d'entrée (2) et l'évacuer par une autre extrémité du au moins un canal d'évacuation (8),
**caractérisé en ce que** dans la région de la partie filtrante de l'axe de filtration (5), au moins une traverse (9) est formée dans l'axe de filtration (5) qui s'étend à travers l'espace creux pour filtrat (6) en sens axial, le canal d évacuation (8) s'étendant sur la longueur de la au moins une traverse (9).

2. Dispositif selon la revendication 1, **caractérisé en ce que** le dispositif de filtration amovible (7) présente une section arquée et comprend de préférence un angle d'au moins 180° et au maximum d'au moins 270° de la circonférence du au moins un axe de filtration (5), de manière particulièrement préférée environ 240° de la circonférence.

3. Dispositif selon une des revendications 1 à 2, **caractérisé en ce que** le au moins un dispositif de filtration (7) est un tamis de filtration.

4. Dispositif selon la revendication 1, **caractérisé en ce que** le dispositif de filtration (7) est agencé entre la au moins une traverse (9) et le au moins un canal d'entrée.

5. Dispositif selon une des revendications 1 ou 4, **caractérisé en ce que** la au moins une traverse (9) présente une forme polygonale en coupe, notamment la forme d'un hexagone.

6. Dispositif selon une des revendications 1, 4, ou 5 **caractérisé en ce que** ladite au moins une traverse (9) est agencée de sorte qu'un axe longitudinal de l'axe de filtration (5) est à l'intérieur de ladite au moins une traverse (9).

7. Dispositif selon une des revendications précédentes, **caractérisé en ce que** le boîtier (1) présente de plus un canal de décharge, dans la position de démarrage, la masse fondue étant déversée de l'autre extrémité du au moins un canal d'évacuation (8) dans le canal de décharge.

8. Dispositif selon une des revendications précédentes, **caractérisé en ce que** le au moins un axe de filtration (5) présente une portion d'axe dont la section correspond à la section de l'espace creux du filtre (4) dans le boîtier (1) de sorte qu'elle remplit l'espace creux de filtre (4) entre le canal d'entrée (2) et le canal de sortie (3), lorsque le au moins un axe de filtration (5) se trouve en position d'échange de filtre.
